# EUROPEAN PATENT SPECIFICATION

(11) **EP 1 907 745 B1**
(45) Date of publication and mention of the grant of the patent: **06.06.2012**
(21) Application number: 05757527.6
(22) Date of filing: 03.07.2005
(51) Int. Cl.: F16L 37/088

(54) **COUPLING BETWEEN TWO TUBES**
KUPPLUNG ZWISCHEN ZWEI ROHREN
ACCOUPLEMENT ENTRE DEUX TUBES

(43) Date of publication of application: 09.04.2008
(73) Proprietor: Widee B.V., 7775 AC Lutten (NL)
(72) Inventor: DE WILDE, Gerrit, Jan, NL-7788 AH Anerveen (NL)
(74) Representative: Schumann, Bernard Herman Johan
(86) International application number: PCT/NL2005/000471
(87) International publication number: WO 2007/004860

(56) References cited:
- EP-A- 0 655 577
- US-A- 2 346 051
- US-A- 4 491 351

## Description

The invention relates to a coupling between a first body with a hole, for instance a cylindrical hole with an axis, and a cylindrical end zone of a second body to be inserted therein in an axial insertion direction, in which hole and/or on the surface of which end zone extends an elastically deformable ring which is fixedly connected to the relevant body, the free end edge of which ring lies substantially on the peripheral plane of an imaginary, substantially rotation-symmetrical body, respectively the diameter of which is smaller than the outer diameter of the end zone of the second body or the diameter of which is greater than the diameter of the hole, which ring is elastically deformable such that, when said end zone is inserted, it bends in the insertion direction and scrapes over the surface thereof with its free edge such that after insertion of the end zone over some distance the movement in backward direction relative to the insertion direction is blocked.

Such a coupling is known from US-2346051 EP-A-0 378 035, EP-A-0 212 883, EP-A-0 579 194, EP-A-0 294 948, EP-A-0 972 981 and DE-A-197 23 594. Relative to this stated prior art it is an object of the invention to embody a coupling between two bodies such that it can be released very easily without specific uncoupling operations and the use of tools intended specifically for this purpose, while in the coupled situation the bodies are nevertheless coupled to each other very firmly and even, ostensibly, inseparably.

These and other objects are realized with a coupling of the type specified in the preamble which has the feature that
the ring is received at least partially in the wall of the hole of the first body or in the surface of the second body, and that
the ring has an interruption with two ends directed toward each other, lies substantially in a flat main plane in the undeformed state and defines an axis, which ends are displaced away from each other in the direction of the axis such that the ring has a helical form and is fixed in this helical form,
such that the free end edge of the ring has an inclining position corresponding to a part of the helix, as a consequence of which, when the second body is rotated around the axis relative to the first body, the form of said helix is followed so that an axial relative movement also occurs and said end zone of the second body can be removed from the hole of the first body and wherein the ring comprises a number of tongues in spaced apart arrangement.

The ring consists of a material and is modelled such that when the coupling between the two bodies is effected an elastic deformation occurs in the ring, wherein the free end edge of the ring moves in scraping manner along the relevant surface of the second body. The backward movement is blocked. The coupling can nevertheless be released, namely by exerting a rotation force between the two bodies, whereby the bodies are separated from each other in the manner of a screw by the plastically deforming or cutting action of the free end edge of the ring. Use could be made of thin sheet-like spring steel. A suitable plastic can also be envisaged.

In a preferred embodiment the tongues are arranged more or less angularly equidistant. In this latter embodiment all exerted forces are distributed substantially homogeneously over the whole periphery.

The tongues can extend on the inner side of the hole but, alternatively, can also be situated on the surface of said end zone. It is recommended for safety reasons when the coupling is effected that the tongues are situated inside the hole, since there is otherwise the danger of the person effecting the coupling being injured by the possibly sharp tongues.

The tongues can consist of any suitable material. A sufficiently strong plastic such as for instance ABS is therefore suitable. Cheaper and very reliable is an embodiment where the tongues consist of metal, in particular steel.

In a preferred embodiment, the coupling according to the invention has the special feature that the tongues form part of a monolithic unit, also comprising a substantially flat ring which is at least partially received in the wall of the hole of the first body. This embodiment is relatively easy to manufacture by punching and pressing, whereby production costs will be relatively low.

This latter embodiment can advantageously have the special feature that the ring has a number of protrusions which during mutual rotation of the two bodies in the stated manner brace themselves against the material of the body to which the ring is fixedly connected. When the end zone of the second body is displaced outward by rotation, a distribution of forces thus takes place over the whole periphery of the ring, which in turn distributes these forces over the protrusions. It will therefore be apparent that these protrusions are preferably distributed regularly, for instance angularly equidistant, over the periphery of the ring. They can lie in the same plane as the ring or also be embodied as additional tongues pressed out of the plane of the ring.

According to yet another aspect of the invention, the coupling according to the invention has the special feature that each tongue has a main direction in axial projection which differs from the radial direction and is in a direction opposite the direction of rotation when the end zone of the second body is moved outward. A more or less radially directed additional force is hereby exerted on each tongue during rotation of the cylindrical end zone of the second body, whereby the ring has a slight tendency to expand, which somewhat facilitates the helical rotation.

In a specific embodiment, the coupling according to the invention has the special feature that the hole has an axial stop for bounding the distance over which said end zone of the second body can be inserted into the hole. Using this embodiment the coupling can be effected in very simple manner by inserting the cylindrical end zone of the second body with some axial force into the cylindrical hole in the first body, wherein the axial insertion distance is determined by said axial stop. This axial stop can for instance be embodied as an annular shoulder, against which the leading edge of the end zone of the second body comes to lie.

According to a determined aspect of the invention, the coupling has the special feature that the first body is a tube or tube stub.

According to yet another aspect of the invention, the coupling can have the special feature that at least said end zone of the second body consists of plastic, concrete, wood or metal, such as iron, copper or aluminium. It is important that the material of the tongues is chosen such that it can co-act effectively in the above described manner with the material of the second body.

An embodiment which is easy to assemble has the specific feature that the ring is accommodated clampingly while being elastically deformed in an annular recess in the relevant wall of the relevant body. In order to prevent unintended rotation of the ring in the situation where the bodies must be separated from each other by relative rotation, use can be made of means preventing such a rotation. The above specified coupling can have for this purpose the special feature that the ring has a number of protrusions which during mutual rotation of the two bodies in the stated manner brace themselves against the material of the body to which the ring is fixedly connected. Alternatively, the annular recess can have a local interruption in the form of a stop wall, with which an end of the ring at the position of the interruption can co-act during said rotation. Unintended rotation of the ring is effectively prevented with both variants.

A coupling according to the invention can for instance be applied for the coupling of two tubes. A two-sided coupling sleeve can thus for instance be coupled at both its ends to respective tubes by means of two associated couplings according to the invention. Such a sleeve can optionally be an outer sleeve or an inner sleeve. In the case of an outer sleeve, the connection between the tubes for coupling to each other can be realized such that these tubes come to rest with their free end edges against each other. A completely medium-tight sealing can further be ensured by making use of suitable sealing means, for instance sealing rings present on the inner surface of the outer sleeve.

The invention is not only suitable for coupling tubes but in general for coupling a body provided with a hole to another body having at least a cylindrical end zone, for instance a solid rod. The coupling according to the invention can thus serve to place an outside letterbox on a for instance wooden post. Table legs can also be connected to a tabletop provided with holes using the coupling according to the invention. A hammerhead provided with a suitable hole can also be connected to a handle with the coupling according to the invention.

The given examples are not limitative and serve only as an indication of possible applications of the invention. What is important is that an established coupling cannot be released by exerting only an axial tensile force on the two bodies. The connection by means of the coupling according to the invention can only be released by mutually rotating the bodies in the above described manner.

The invention will now be elucidated on the basis of the accompanying drawings.

In the drawing:
Fig. 1A shows an exploded side view of a coupling according to the invention in a first embodiment;
Fig. 1B shows a cross-section corresponding with Fig. 1A;
Fig. 1C is a perspective view corresponding with Fig. 1A and 1B;
Fig. 2A shows an exploded side view of a coupling according to a second non-inventive embodiment;
Fig. 2B shows a cross-section corresponding to Fig. 2A;
Fig. 2C is a perspective view corresponding with Fig. 2A and 2B.
Fig. 3A shows an exploded side view of a coupling according to the invention in a third embodiment;
Fig. 3B shows a cross-section corresponding with Fig. 3A;
Fig. 3C is a perspective view corresponding with Fig. 3A and 3B;
Fig. 4A shows an exploded side view of a coupling according to the invention in a fourth embodiment;
Fig. 4B shows a cross-section corresponding to Fig. 4A; and
Fig. 4C is a perspective view corresponding with Fig. 4A and 4B.

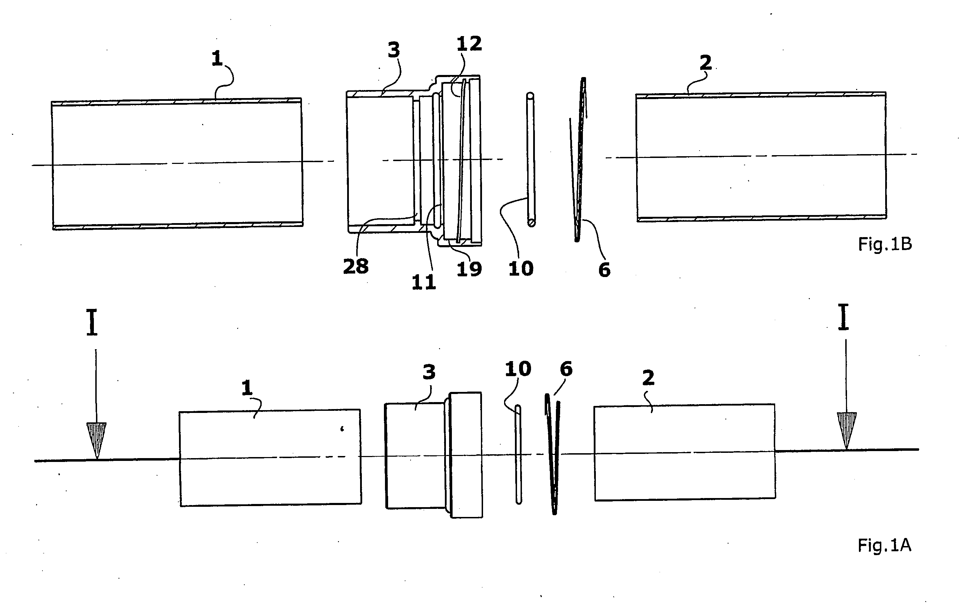

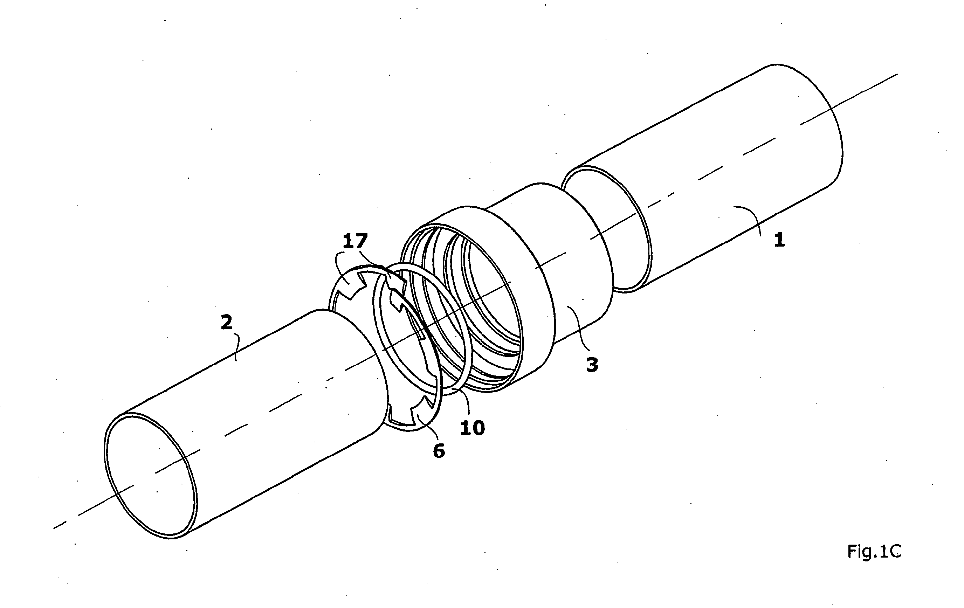

Fig. 1A, 1B, 1C show a first embodiment. A tube 1 is coupled to a tube 2 by means of a coupling sleeve 3. Coupling sleeve 3 is pushed over the end of tube 1 and connected sealingly thereto, for instance by means of glueing. On the other side coupling sleeve 3 has a recess in which a sealing ring 10 is received which can co-act sealingly with a tube 2 inserted into coupling sleeve 3. When tube 2 is inserted the relevant end of tube 2 passes with a certain force a cutting ring 6 of spring steel with inward protruding tongues 17. Cutting ring 6 is screwed into a groove-like recess with a helical form present in the inner surface of the widened end zone 19 of a coupling sleeve 3. A recess 12 extends as far as the free end of the relevant inner surface such that the cutting ring, which is provided with an opening, can take on the helical form indicated in the figures or which has already obtained this beforehand.

Thus is achieved that tongues 17, which lie in the same plane as ring 6, scrape over tube 2 during insertion thereof. Only by rotating tube 2 in the relevant direction relative to coupling sleeve 3 can tube 2 be removed from coupling sleeve 3 again by performing a screwing movement. It is noted that cutting ring 6 then performs an actual cutting operation in the outer surface of tube 2. The forces which occur can be quite great. There is therefore the risk of the cutting ring co-rotating with tube 2 and thus leaving the recess 12. In order to prevent this the cutting ring can for instance be glued into recess 12 or be provided with protrusions preventing this rotation.

It will be apparent from the above that the coupling between coupling sleeve 3 and tube 2 is sealing and relasable.

The inner surface of coupling sleeve 3 has an annular stop shoulder 3 which defines the distance over which the first tube 1 can be inserted into coupling sleeve 3.

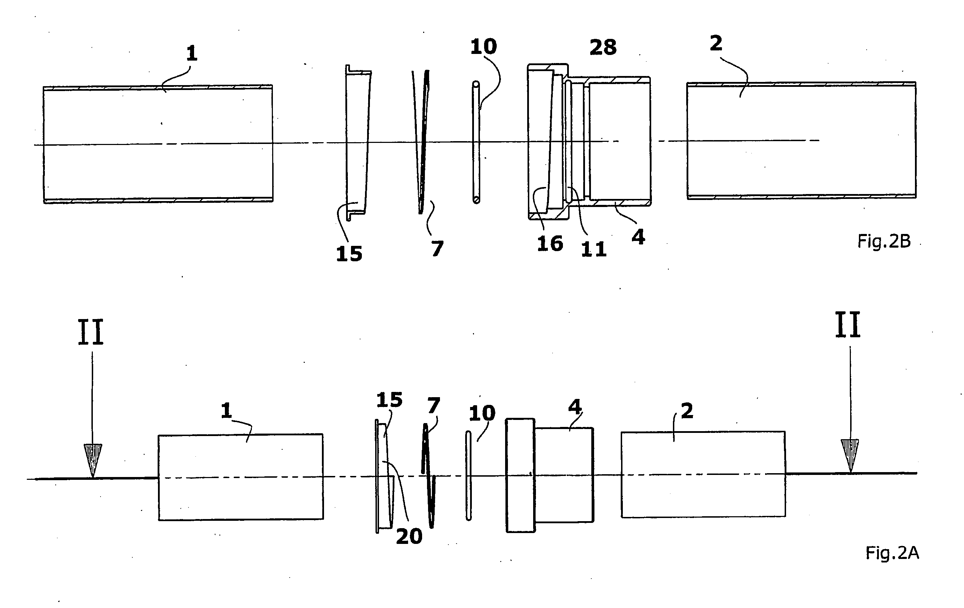

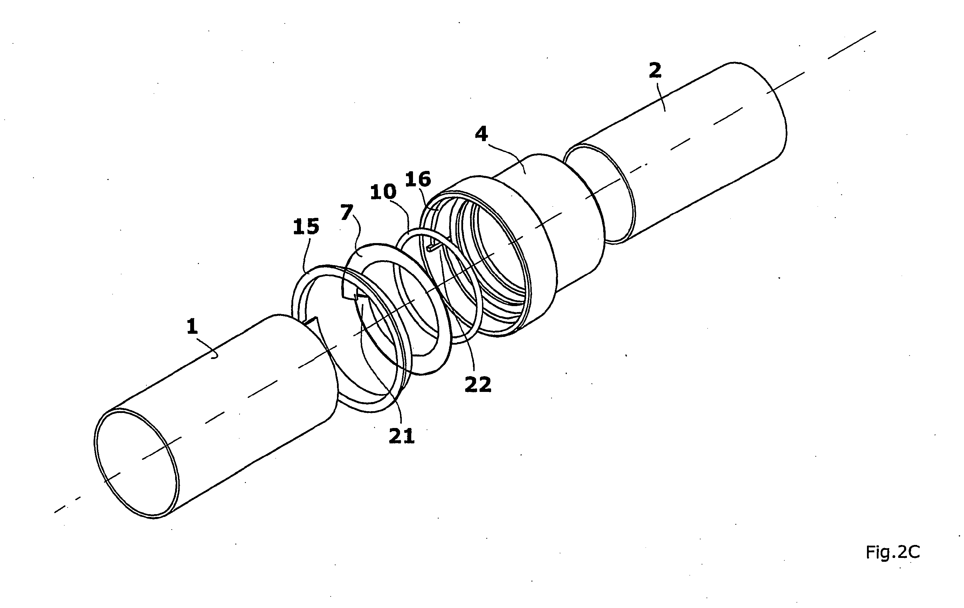

Fig. 2A, 2B and 2C show a second embodiment. This is distinct from the first embodiment according to Fig. 1 in two aspects.

As shown particularly clearly in Fig. 2C, cutting ring 7 is embodied as a smooth ring, i.e. a ring not provided with tongues 17. So as to nevertheless obtain the desired operation, i.e. the possibility of inserting tube 2 axially and being able to remove it again only with the screwing movement, it is essential for ring 7 to possess a certain degree of elastic deformability, whereby the inner diameter can be slightly increased temporarily during insertion of tube 2 and the backward movement is blocked. The cutting action can be further obtained only when the cutting inner edge is indeed effectively able to plastically deform tube 2 in cutting manner. Thin, sheet-like spring steel could be a good choice for ring 7. It will be apparent that this depends partly on the material of tube 2.

Attention is further drawn to the fact that cutting ring 7 is held in its helical form in a manner other than according to Fig. 1. In this embodiment use is made for this purpose of a helical support surface 16 on the inner side of coupling sleeve 4. Cutting ring 7 is placed and then pressed thereagainst by means of a closing ring 15 of complementary form with a correspondingly formed helical surface 20. The closing ring can for instance be connected to coupling sleeve 3 in tightly clamping manner of by means of a glued connection while enclosing cutting ring 7.

In this embodiment the rotation locking of cutting ring 7 is ensured in that during outward screwing of the second tube 2 the free end 21 of cutting ring 7 encounters a stopping force from a relevant stop surface 22 on the end of the helical surface 16 on the inner side of coupling sleeve 4.

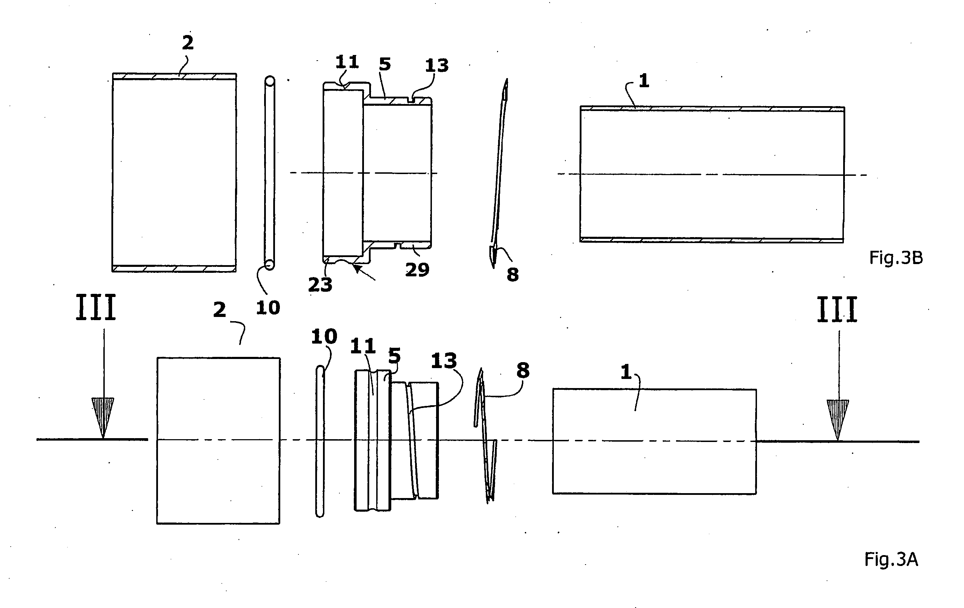

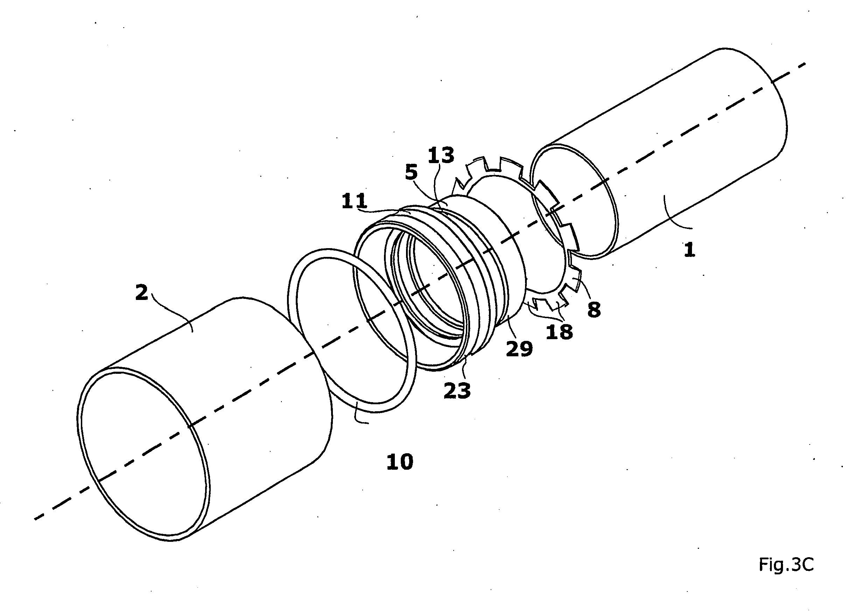

Fig. 3A, 3B and 3C show a third embodiment. This is distinct from the other embodiments in the sense that cutting ring 8 is provided with tongues 18 extending in outward direction. The open cutting ring is accommodated in a helical recess 13 on the outer side of a coupling sleeve 5. Tube 1 is inserted into coupling sleeve 5 and connected sealingly thereto, for instance by means of a glued connection. On the outer side of the coupling sleeve, on the widened end zone 23 thereof, is situated a recess for receiving the sealing ring 10. Tube 2 can be pushed sealingly via seal 10 over coupling sleeve 5 and then come into scraping contact with tongues 18 of cutting ring 8. These hereby deform, just as in the case of the other exemplary embodiments, in forward direction, whereby backward displacement of tube 2 is blocked. This can take place only through a relevant rotating displacement of tube 2.

Similarly to cutting ring 6, cutting ring 8 can be provided with provisions preventing rotation, such as a glued connection, hooking protrusions or the like.

Other than in the embodiments of Fig. 1 and 2, coupling sleeve 5 has no annular stop shoulder 28. This could be desirable, and can then be situated for instance in the transition between the widened end zone and the narrower part 29 of coupling sleeve 5.

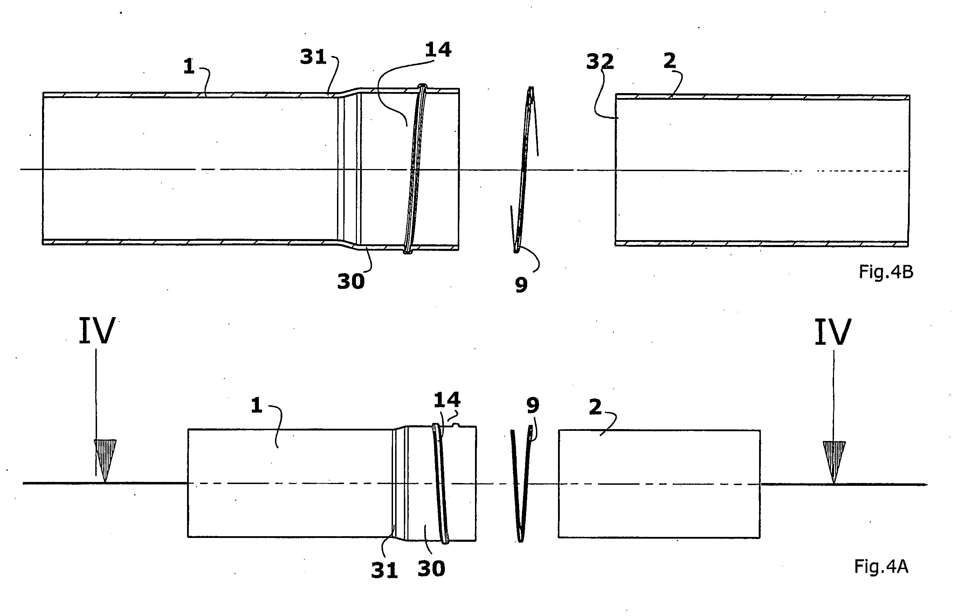

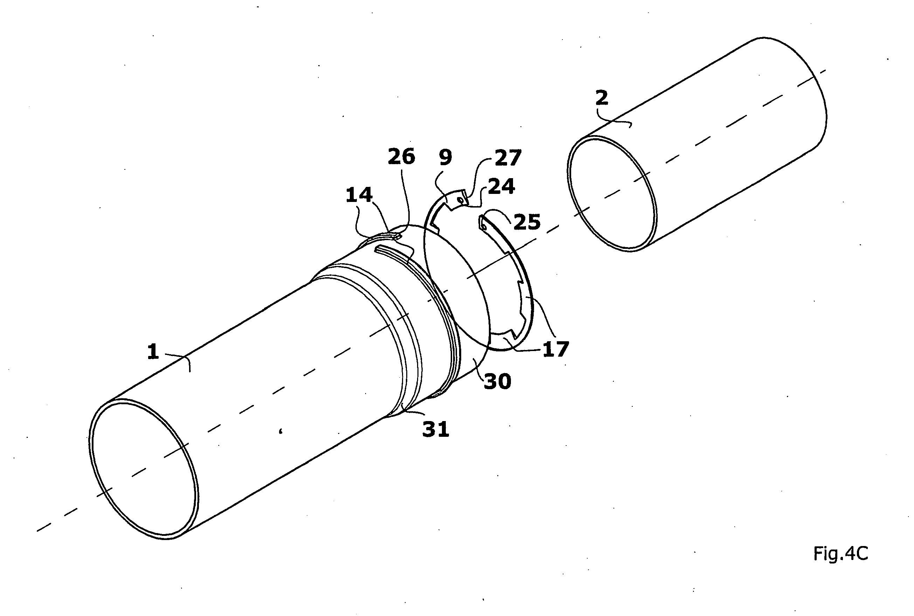

Fig. 4 shows a fourth exemplary embodiment. In this embodiment a tube 1 comprises an internal recess 14 in which a cutting ring 9 with inward directed tongues 17 can be received clampingly under spring force. In rest position the cutting ring 9 has a relatively large diameter. The free end zones are provided with through-holes 24, 25 which, in the manner of a resilient locking ring, can be compressed by means of a suitable tool, for instance pointed pliers. In this compressed position the ring 9 is placed in position in the vicinity of recess 14, whereafter the compressing force is ended and ring 9 is brought and held clampingly in position in recess 14.

In this embodiment the end surface 26 of recess 14 serves as stop for the end surface 27 of ring 9 coacting therewith, whereby the ring is blocked against rotation in the case the second tube 2 is screwed outward.

Tube 1 has the same diameter as the second tube 2. To enable mutual coupling of the tubes the first tube 1 is provided with a widened end zone 30 in which the recess 14 is situated. A more or less conical transition zone 31 is situated between the first tube 1 and the widened end zone 30. By pressing the free end 32 with some force against this transition zone 31 during insertion, a seal is realized which is sufficient for many applications. If desired, a further sealing ring can be accommodated in an annular recess between the transition zone and recess 14, in a manner analogous to recess 11 in coupling sleeve 3.

It will be apparent that the invention is not limited to the drawn and described exemplary embodiments. Diverse modifications are possible without departing from the scope of the invention.

## Claims

1. Coupling between a first body with a hole, for instance a cylindrical hole with an axis, and a cylindrical end zone of a second body (2) to be inserted therein in an axial insertion direction, in which hole and/or on the surface of which end zone extends an elastically deformable ring (6) 8, 9 which is fixedly connected to the relevant body, the free end edge of which ring (6,8,9) lies substantially on the peripheral plane of an imaginary, substantially rotation-symmetrical body, respectively the diameter of which is smaller than the outer diameter of the end zone of the second body (2) or the diameter of which is greater than the diameter of the hole, which ring (6,4,9) is elastically deformable such that, when said end zone is inserted, it bends in the insertion direction and scrapes over the surface thereof with its free edge such that after insertion of the end zone over some distance the movement in backward direction relative to the insertion direction is blocked,
in which
the ring (6,8,9) is received at least partially in the wall of the hole of the first body (1,3,4) or in the surface of the second body, (2) and that
the ring (6,8,9) has an interruption with two ends directed toward each other, lies substantially in a flat main plane in undeformed state and defines an axis, which ends are displaced away from each other in the direction of the axis such that the ring (6,8,9) has a helical form and is fixed in this helical form,
such that the free end edge of the ring has an inclining position corresponding to a part of the helix, as a consequence of which, when the second body is rotated around the axis relative to the first body, the form of said helix is followed so that an axial relative movement also occurs and said end zone of the second body (2) can be removed from the hole of the first body (1) 3,4)
**characterized in that**
the ring (6,7,8,9) comprises a number of tongues in spaced-apart arrangement.

2. Coupling as claimed in claim 1, wherein the tongues (17,18) are arranged more or less angularly equidistant.

3. Coupling as claimed in claim 1, wherein the ring (6,8,9) consists of metal, in particular steel.

4. Coupling as claimed in claim 1, wherein the ring (6,8,9) has a number of protrusions which during mutual rotation of the two bodies (1,2,3,4) in the stated manner brace themselves against the material of the body to which the ring is fixedly connected.

5. Coupling as claimed in claim 4, wherein the protrusions are embodied as barbed hooks.

6. Coupling as claimed in any of the foregoing claims, wherein each tongue has a main direction in axial projection which differs from the radial direction and is in a direction opposite the direction of rotation when the end zone of the second body (2) is moved outward.

7. Coupling as claimed in claim 1, wherein the hole has an axial stop (28) for bounding the distance over which said end zone of the second body can be inserted into the hole.

8. Coupling as claimed in claim 1, wherein the first body is a tube (1) or tube stub.

9. Coupling as claimed in any of the foregoing claims, wherein at least said end zone of the second body (2) consists of plastic, concrete, wood or metal, such as iron, copper or aluminium.

10. Coupling as claimed in claim 2, wherein the ring is accommodated clampingly while being elastically deformed in a helical recess in the relevant wall of the relevant body.

## Patentansprüche

1. Kupplung zwischen einem ersten Körper (1,3,4) mit einem Loch, beispielsweise einem zylindrischen Loch mit einer Achse, und einem zylindrischen Endbereich eines zweiten Körpers (2), der in axialer Einlegerichtung darin eingefügt werden soll, in diesem Loch und/oder auf der Oberfläche dieses Endbereichs erstreckt sich ein elastisch verformbarer Ring (6, 8, 9), der fest mit dem entsprechenden Körper verbunden ist, die freie Endkante dieses Rings (6, 8, 9) liegt im Wesentlichen auf der Außenfläche eines imaginäeren, im Wesentlichen rotations-symmetrischen Körpers, entsprechend dem Durchmesser, der kleiner als der äußere Durchmesser des Endbereichs des zweiten Körpers (2) ist, oder dem Durchmesser, der größer als der Durchmesser des Lochs ist, der Ring (6, 8, 9) ist elastisch verformbar, sodass, wenn dieser Endbereich eingefügt wird, er sich in die Einfügerichtung biegt und mit der freien Kante so über die Oberfläche davon schabt, dass nach dem Einfügen des Endbereiches über etwas Distanz, die Bewegung in Rückwärtsrichtung relativ zur Einfügerichtung blockiert ist,
wobei
der Ring (6, 8, 9) wenigstens teilweise in der Wand des Lochs des ersten Körpers (1, 3, 4) oder in die Oberfläche des zweiten Körpers (2) eingefügt wird, und dass
der Ring (6, 8, 9) eine Unterbrechung mit zwei einander zugewandten Enden hat, im Wesentlichen im unverformten Zustand in einer flachen Ebene liegt und eine Achse definiert, deren Enden in Richtung der Achse so voneinender versetzt sind, dass der Ring (6, 8, 9) eine Spiralform hat und in dieser Spiralform so fixiert ist,
dass das freie Ende der Kante des Rings eine schräge Position in Bezug auf einen Teil der Spirale hat, als Konsequenz daraus, wenn der zweite Körper um die Achse relativ zum ersten Körper gedreht wird, wird die Form dieser Spirale nachgefahren, sodass eine axiale Relativbewegung auch auftritt und dieser Endbereich des zweiten Körpers (2) aus dem Loch des ersten Körpers (1, 3, 4) entfernt werden kann,
**dadurch gekennzeichnet, dass**
der Ring (6, 7, 8, 9) eine Anzahl von Federn (17, 18) in voneinender beabstandeter Anordnung umfasst.

2. Kupplung nach Anspruch 1, wobei die Federn (17, 18) mehr oder weniger winklig in gleichem Abstand angeordnet sind.

3. Kupplung nach Anspruch 1, wobei der Ring (6, 8, 9) aus Metall besteht, insbesondere aus Stahl.

4. Kupplung nach Anspruch 1, wobei der Ring (6, 8, 9) eine Anzahl von Vorsprüngen hat, die während der gegenseitigen Drehung der zwei Körper (1, 2, 3, 4) in genannter Weise sich gegenseitig am Material des Körpers abstützen, mit dem der Ring fest verbunden ist.

5. Kupplung nach Anspruch 4, wobei die Vorsprünge als Widerhaken ausgestaltet sind.

6. Kupplung nach einem der vorhergehenden Ansprüche, wobei jede Feder eine Hauptrichtung in axialer Projektion hat, die von der radialen Richtung abweicht und in entgegengesetzter Richtung der Rotation ist, wenn der Endbereich des zweiten Körpers (2) heraus bewegt wird.

7. Kupplung nach Anspruch 1, wobei das Loch einen axialen Anschlag (28) hat, um den Abstand zu begrenzen, über den dieser Endbereich des zweiten Körpers in das Loch eingefügt werden kann.

8. Kupplung nach Anspruch 1, wobei der erste Körper ein Rohr (1) oder ein Rohrstumpf ist.

9. Kupplung nach einem der vorhergehenden Ansprüche, wobei wenigstens der Endbereich des zweiten Körpers (2) aus Kunststoff, Beton, Holz oder Metall, wie Eisen Kupfer oder Aluminium, besteht.

10. Kupplung nach Anspruch 2, wobei der Ring unter Spannung angeordnet ist, während er elastisch verformt wird in eine spiralförmige Aussparung (12, 13) der betreffenden Wand des betreffenden Körpers.

## Revendications

1. Raccord entre un premier corps (1, 3, 4) avec un trou, par exemple un trou cylindrique avec un axe, et une zone d'extrémité cylindrique d'un second corps (2) à insérer à l'intérieur dans une direction d'insertion axiale, dans lequel trou et/ou sur la surface de laquelle zone d'extrémité, s'étend une bague pouvant être déformée élastiquement (6, 8, 9) qui est connectée de manière fixe au corps approprié, le bord d'extrémité libre de ladite bague (6, 8, 9) se trouve sensiblement sur le plan périphérique d'un corps imaginaire et sensiblement symétrique en rotation, respectivement, dont le diamètre est plus petit que le diamètre extérieur de la zone d'extrémité du second corps (2) ou dont le diamètre est plus grand que le diamètre du trou, laquelle bague (6, 8, 9) peut être déformée élastiquement de telle sorte que, lorsque ladite zone d'extrémité est insérée, elle fléchisse dans la direction d'insertion et racle la surface de celle-ci avec son bord libre de telle sorte qu'après l'insertion de la zone d'extrémité sur une certaine distance, un déplacement dans la direction vers l'arrière par rapport à la direction d'insertion soit bloqué ;
dans lequel :
la bague (6, 8, 9) est reçue au moins en partie dans la paroi du trou du premier corps (1, 3, 4) ou dans la surface du second corps (2) ; et dans lequel :
la bague (6, 8, 9) présente une interruption avec deux extrémités dirigées l'une vers l'autre, se situe sensiblement dans un plan principal plat dans un état non déformé et définit un axe, lesquelles extrémités sont déplacées en s'éloignant l'une de l'autre dans la direction de l'axe, de telle sorte que la bague (6, 8, 9) présente une forme hélicoïdale et soit fixée sous cette forme hélicoïdale ;
de telle sorte que le bord d'extrémité libre de la bague présente une position inclinée qui correspond à une partie de l'hélice, à la suite de quoi, lorsque le second corps (2) tourne autour de l'axe par rapport au premier corps, la forme de ladite hélice est suivie de telle sorte qu'un déplacement relatif axial se produise également et que ladite zone d'extrémité du second corps (2) puisse être retirée du trou du premier corps (1, 3, 4) ;
**caractérisé en ce que** :
la bague (6, 8, 9) comprend un certain nombre de languettes (17, 18) agencées de manière espacée.

2. Raccord selon la revendication 1, dans lequel les languettes (17, 18) sont agencées plus ou moins équidistantes de manière angulaire.

3. Raccord selon la revendication 1, dans lequel la bague (6, 8, 9) est réalisée dans un métal, en particulier l'acier.

4. Raccord selon la revendication 1, dans lequel la bague (6, 8, 9) présente un certain nombre de saillies qui, au cours d'une rotation mutuelle des deux corps (1, 2, 3, 4) dans l'état indiqué, s'appuient contre le matériau du corps auquel la bague est connectée de manière fixe.

5. Raccord selon la revendication 4, dans lequel les saillies sont incorporées en tant que crochets à crans.

6. Raccord selon l'unes quelconque des revendications précédentes, dans lequel chaque languette présente une direction principale dans une projection axiale qui diffère de la direction radiale, et se situe dans une direction opposée à la direction de rotation lorsque la zone d'extrémité du second corps (2) est déplacée vers l'extérieur.

7. Raccord selon la revendication 1, dans lequel le trou présente un arrêt axial (28) destiné à limiter la distance sur laquelle ladite zone d'extrémité du second corps peut être insérée dans le trou.

8. Raccord selon la revendication 1, dans lequel le premier corps est un tube (1) ou un tronçon de tube.

9. Raccord selon l'unes quelconque des revendications précédentes, dans lequel au moins ladite zone d'extrémité du second corps (2) est réalisée en matière plastique, en béton, en bois ou dans un métal tel que le fer, le cuivre ou l'aluminium.

10. Raccord selon la revendication 2, dans lequel la bague est reçue de manière serrée tout en étant déformée élastiquement dans un évidement hélicoïdal (12, 14), dans la paroi appropriée du corps approprié.
